(19) Europäisches Patentamt / European Patent Office / Office européen des brevets

(11) **EP 2 818 515 B1**

(12) **EUROPEAN PATENT SPECIFICATION**

(45) Date of publication and mention of the grant of the patent:
**12.10.2016 Bulletin 2016/41**

(21) Application number: **13752175.3**

(22) Date of filing: **20.02.2013**

(51) Int Cl.:
*C08L 27/12* (2006.01)     *C08J 5/18* (2006.01)
*C08K 3/22* (2006.01)      *C08K 3/00* (2006.01)
*C08K 5/00* (2006.01)

(86) International application number:
**PCT/JP2013/054082**

(87) International publication number:
**WO 2013/125548 (29.08.2013 Gazette 2013/35)**

(54) **FLUORORESIN FILM**

FLUORHARZFILM

FILM À BASE D'UNE RÉSINE FLUORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2012 JP 2012037012**

(43) Date of publication of application:
**31.12.2014 Bulletin 2015/01**

(73) Proprietor: **Toray Advanced Film Co., Ltd.**
**Chuo-ku**
**Tokyo 103-0021 (JP)**

(72) Inventors:
• **IMAIZUMI, Kazuyuki**
  **Takatsuki-shi**
  **Osaka 569-0807 (JP)**

• **NOGUCHI, Yukio**
  **Takatsuki-shi**
  **Osaka 569-0807 (JP)**
• **KIMOTO, Atsushi**
  **Takatsuki-shi**
  **Osaka 569-0807 (JP)**

(74) Representative: **Kador & Partner**
**Corneliusstraße 15**
**80469 München (DE)**

(56) References cited:
**JP-A- 2002 069 258     JP-A- 2012 019 712**
**JP-A- 2012 021 056**

• **DATABASE WPI Week 200440 Thomson Scientific, London, GB; AN 2004-422996 XP002743571, & JP 2004 025586 A (ASAHI GLASS CO LTD) 29 January 2004 (2004-01-29)**

**Description**

Technical Field

The present invention relates to fluorine resin film with high heat ray shielding property. More specifically, it relates to fluorine resin film with high heat ray shielding property that is colorless and transparent and through which natural colors are clearly visible.

Technical Background

With high weather resistance, transparency, mechanical properties, and moisture resistance, fluorine resin films have been used as greenhouse covering material, roofing film material, window material, solar cell surface protection material, condensing panel surface material, display plate surface material, building exterior material, and the like.

In the fields of building materials including roofing film material and window material, in particular, demands for fluorine resin films have been increasing because of its advantages as environment-conscious material that can allow sunlight into rooms to eliminate the need of indoor lighting during the day and as material that provides high visibility of natural-colored indoor exhibits under natural light and promotes spaciousness as a result of the sky being visible through the roofs.

On the other hand, sunlight can be harmful because it contains ultraviolet light and infrared light (heat rays). If exposed to strong ultraviolet light, for instance, some people may suffer from dermatitis and synthesized material may be degraded. Large quantities of incoming infrared light may cause a rise in the temperature in rooms, making people there feel uncomfortable, or cause damage to plants grown in greenhouses.

In order to solve these problems, for example, patent document 1 discloses an agricultural sheet with infrared light shielding property that is composed mainly of synthetic resin and inorganic fine particles such as tin oxide mixed and dispersed therein; patent document 2 discloses fluorine resin film containing metal oxide particles whose surfaces are coated with amorphous silica; and patent document 3 discloses a fluorine resin composite sheet with heat ray shielding property that contains inorganic particles with infrared light shielding property at least at one surface.

Furthermore, patent document 4 discloses colored or colorless, highly transparent biaxially orientated polyester films for window glass protection that have an interlayer containing a near infrared light absorbent and patent document 5 discloses an electrically conductive, transparent laminate developed by improving the color transmission property of an electrically conductive, transparent film that can shield infrared light containing heat rays.

However, the agriculture sheet disclosed in patent document 1 contains at least 3 parts by weight or more, or 10 parts by weight or more, of inorganic particles that are composed mainly of tin oxide per 100 parts by weight of synthetic resin, and accordingly, it is high in shielding property for infrared light containing heat ray but low in visible light transmittance, leading to objects appearing darker and hence, inferior see-through visibility. In addition, since it is a composite resin containing, as base resin, one selected from polyethylene terephthalate resin, polyvinyl chloride resin, and polyolefin resin, and therefore, it suffers from strength degradation and color fade-out caused by ultraviolet light even if an antifouling layer or dew prevention layer is provided on its surface, making it difficult to ensure long term durability.

The fluorine resin film with heat ray shielding property disclosed in patent document 2 is composed of fluorine resin and composite particles, 95% of which have a particle diameter in the range of 0.1 to 30 $\mu$m, that are dispersed therein. The composite particles used there are composite particles of a metal oxide whose surfaces are coated with amorphous silica, but since they have large particle diameters (average particle diameter 0.5 to 10 $\mu$m), its addition in a quantity required for heat ray shielding will decrease the transparency and develop particle-based colors, leading to the disadvantage that objects seen through the film do not appear to have natural colors.

Proposed in patent document 3 is a composite sheet that includes a reinforcement base with at least one surface provided with a fluorine resin layer containing inorganic particles with near infrared light shielding property. The reinforcement base used is of a fiber woven fabric such as glass fiber woven fabric, polyamide based fiber woven fabric, and polyester based fiber woven fabric, and colored patterns of the fiber woven fabric may show up, leading to the problem of inferior see-through visibility.

Patent document 4 proposes a co-extruded three-layered polyester laminate film that contains an interlayer formed of polyester resin and an immonium based compound, phthalocyanine compound, aluminum compound, polymethine compound, etc., added as a near infrared light absorbent for controlling the solar transmittance, and has a visible light transmittance in the range of 70 to 90% and a haze of 5.0% or less. This method also suffers inevitably from coloring of the transmitted light caused by the near infrared light absorbent, leading to the problem of a decrease in the visible light transmittance. Also proposed is a colored film that has an interlayer containing a near infrared light absorbent and a dye that absorbs light in the visible light region, but this is intended for coloring and accordingly causes a further decrease in visible light transmittance. Since the base is made of polyester resin, furthermore, it suffers from degradation caused by ultraviolet light, making it difficult to ensure long term weather resistance.

Patent document 5 discloses an electrically conductive transparent laminate formed of a transparent substrate on which a material with a specific refractive index and an electrically conductive transparent film of indium tin oxide (hereinafter occasionally referred as ITO) are stacked in this order so that the laminate has a neutral color without yellowing caused by the light passing through the ITO. Since the electrically conductive transparent film (ITO) is located as the outermost layer, this method has the problems of an inferior long term weather resistance at outdoor sites and deterioration in folding endurance and abrasion resistance characteristic of thin laminates. Furthermore, the formation of an electrically conductive transparent film (ITO) by a process such as vacuum deposition, sputtering, and CVD, also has the problem of troublesome processing operations and increased costs.

Prior Art Documents

Patent Documents

Patent document 1: Japanese Unexamined Patent Publication (Kokai) No. HEI-9-205898
Patent document 2: Japanese Unexamined Patent Publication (Kokai) No. 2002-69258
Patent document 3: Japanese Unexamined Patent Publication (Kokai) No. 2004-25586
Patent document 4: Japanese Unexamined Patent Publication (Kokai) No. 2001-171060
Patent document 5: Japanese Unexamined Patent Publication (Kokai) No. 2008-181838 JP2004025586 discloses fluororesin composite sheets for roof material.

Summary of the Invention

Problems to be Solved by the Invention

An object of the present invention is to solve the above problems to provide colorless and transparent, heat ray-shielding fluorine resin film that is high in heat ray shielding property and through which natural colors are clearly visible while maintaining good characteristics of the fluorine resin film including mechanical characteristics, transparency, and long term weather resistance. Note that the heat ray shielding property referred to for the present invention is defined as the general function of reflecting or absorbing the entirety or a part of the light beams that commonly fall under the category of infrared light so as to block the entirety or a part thereof.

Means of Solving the Problems

To solve the above problems, the present invention is configured as described below.

(i) Fluorine resin film including indium tin oxide with an average particle diameter of 10 to 200 nm and a blue pigment with an average particle diameter of 10 to 200 nm and satisfying the following formulae (1) and (2) simultaneously:

$$10/t \leq A \leq 60/t \qquad (1)$$

$$0.05A \leq B \leq 0.3A \qquad (2)$$

where A, B, and t represent the content (wt%) of the indium tin oxide, the content (wt%) of the blue pigment, and the thickness ($\mu$m) of the film, respectively.
(ii) Fluorine resin film as described above further satisfying the following formula (A):

$$20 \leq T_{IR} \leq 70 \qquad (A)$$

where $T_{IR}$ represents the light transmittance (%) in the wavelength range of 1,800 to 2,200 nm.
(iii) Fluorine resin film as described above having a thickness t of 10 to 500 $\mu$m and satisfying the following formulae (3), (4), and (5) simultaneously:

$$-0.01t \leq YI \leq 0.03t \qquad (3)$$

$$85 \leq T_V \leq 98 \qquad (4)$$

$$20 \leq T_{IR} \leq 50 \qquad (5)$$

where YI, $T_V$, and $T_{IR}$ represent the yellowness of the fluorine resin film, the light transmittance (%) in the wavelength range of 380 to 700 nm, and the light transmittance (%) in the wavelength range of 1,800 to 2,200 nm, respectively, and (iv) Fluorine resin film as described above, wherein the blue pigment is cobalt blue.

Advantageous Effect of the Invention

The present invention serves to obtain fluorine resin film having both colorless transparency and heat ray shielding property in which the yellowing attributable to the addition of indium tin oxide does not take place and the transmittance of harmful light beams are controlled while maintaining the characteristics inherent in the fluorine resin film including transparency, mechanical characteristics, and weather resistance.

Brief Description of the Drawings

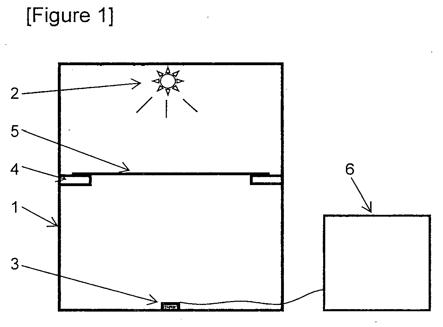

[Fig. 1] Fig. 1 shows a schematic diagram of the test device used for evaluation of heat ray shielding property.

Description of Preferred Embodiments

The fluorine resin film according to the present invention includes a resin made mainly of a fluoroolefin homopolymer, a copolymer of a plurality of fluoroolefins, or a copolymer of one or more fluoroolefins and one or more other monomers.

A fluoroolefin is a monomer that has a polymerizable unsaturated bond and a fluorine atom and may additionally contain other atoms such as hydrogen atom, chlorine atom, and oxygen atom. The fluoroolefins include, for instance, tetrafluoroethylene, vinyl fluoride, vinylidene fluoride, perfluoroalkyl vinyl ether, chlorotrifluoroethylene, and hexafluoropropylene. Such other monomers are preferably non-fluorine-containing monomers including olefins such as ethylene, propylene, butene, and norbornene; alkenyl ethers such as cyclohexylmethyl vinyl ether, isobutyl vinyl ether, cyclohexyl vinyl ether, ethyl vinyl ether, and ethyl allyl ether; and alkenyl esters such as vinyl acetate, vinyl pivalate, and allyl pivalate.

Major fluorine resins include, but not limited to, polytetrafluoroethylene (PTFE), tetrafluoroethylene - hexafluoropropylene copolymer (FEP), tetrafluoroethylene - propylene copolymer, ethylene - tetrafluoroethylene copolymer (ETFE), tetrafluoroethylene - hexafluoropropylene - ethylene copolymer, tetrafluoroethylene - perfluoropropyl vinyl ether copolymer (PFA), other tetrafluoroethylene - perfluoroalkyl vinyl ether copolymers, polyvinylidene fluoride (PVDF), vinylidene fluoride - hexafluoropropylene copolymer, vinylidene fluoride - tetrafluoroethylene - hexafluoropropylene copolymer, polyvinyl fluoride (PVF), polychlorotrifluoroethylene (PCTFE), and ethylene - chlorotrifluoro ethylene copolymer (ECTFE), and in addition, they also include mixtures thereof and other fluorine resins composed thereof as primary components.

The fluorine resin to be used may also contain a non-fluorine-containing thermoplastic resin and various additives as required unless they impair the good characteristics of the fluorine resin. For instance, such thermoplastic resins include, olefin-, acrylic-, ester-, or amide-based and other various resins, and such additives include various pigments (other than the blue pigment used for the present invention), dyes, organic or inorganic fine particles (other than the indium tin oxide used for the present invention), fillers, and dispersing agents.

When used as agricultural greenhouse covering material or roofing film material, it is preferable from the viewpoint of film production efficiency, film transparency, handleability, and cost to adopt a resin made mainly of ETFE, FEP, PVF, or PVDF, of which ETFE based resin is more preferable.

For the present invention, indium tin oxide (ITO) is defined as an inorganic compound composed mainly of indium oxide and tin oxide. It is known to have optical transparency in the visible light region and show electric conductivity owing to its charge density. With these characteristics, it has been used widely as material for transparent electrodes. For instance, it has been widely applied to liquid crystal displays, plasma displays, touch screens, electronic ink for electronic paper, electrodes for organic ELs, solar batteries, antistatic agents, and electromagnetic wave shields.

Powder of ITO has a color in the range of yellow to gray. Resin that contains dispersed ITO has transparency but will slightly assume the color of the powder (yellow to gray) when exposed to light.

For the present invention, ITO is used in the form of fine particles. There are no specific limitations on the method to be used to produce fine particles of ITO, and useful methods include, for instance, a powder sintering process in which indium oxide powder and tin oxide powder are compression-molded and sintered and a process in which an aqueous solution of an indium salt and tin salt is neutralized to produce a precipitate, which is then filtered, washed, dried, and calcined. It is known that the material can be pulverized industrially so as to provide fine particles with an average particle diameter of 100 nm or less.

The fluorine resin film according to the present invention contains fine particles of ITO with an average particle diameter in the range of 10 to 200 nm. If it is more than 200 nm, the film will suffer from a decrease in light transmittance and an increase in haze and will not serve effectively as transparent film because of poor visibility as described above. If it is less than 10 nm, the film will fail to have a sufficiently high efficiency in heat ray shielding.

Furthermore, the component ratio between indium oxide and tin oxide is adjustable. Many of the generally available products have an indium oxide to tin oxide ratio of 95:5 (wt% ratio, hereinafter the same), but others varying in the ratio from 85:15 to 97:3 are also available. An appropriate one may be selected to satisfy the requirement for having both transparency and heat ray shielding property. In terms of the content, the use of one with an indium oxide to tin oxide ratio of 97:3 is more preferable because such one can exert a required effect in smaller amounts as compared to others with different component ratios. Actually, a large quantity of indium tin oxide will be necessary when applied to transparent roofing film material, window material, or wall material. Accordingly, it is preferable to adopt a mixture with an indium oxide to tin oxide ratio of 95:5 from the viewpoint of stable availability.

The blue pigment to be used for the present invention is an inorganic or organic compound that assumes a blue color when exposed to sunlight, and such pigments include inorganic ones such as cobalt based and manganese based pigments and organic ones such as indigo based, phthalocyanine based, and anthraquinone based pigments. Cobalt based pigments and phthalocyanine based pigments are preferable from the viewpoint of handleability and coloring performance after being added to fluorine resin, and cobalt based pigments, cobalt blue among others, are more preferable from the viewpoint of their effect of depressing the yellowing caused by the addition of ITO as well as heat resistance and weather resistance.

Cobalt blue is also called cobalt ultramarine or Pigment Blue 28. It is expressed by the compositional formula of $CoAl_2O_4$ (cobalt aluminate) or $CoO \cdot Al_2O_3$ (spinel type crystal of cobalt oxide and aluminum oxide). It is high in light resistance, weather resistance, acid resistance, and alkali resistance, and exhibits very stable color developing capability during the step of adding it to fluorine resin or during outdoor exposure of the film.

In general, the organometallic blue pigment that is called phthalocyanine blue and widely used as blue pigment is comparable to inorganic pigments in depressing the yellowing. For addition to fluorine resin, however, the use of cobalt blue is preferable because it can be applied to a wider range of applications from the viewpoint of heat resistance and weather resistance depending on use conditions. A blue pigment contained in the fluorine resin film according to the present invention has an average particle diameter in the range of 10 to 200 nm. If it is less than 10 nm, it will be impossible to achieve a sufficient degree of light scattering required for the fluorine resin film to assume a blue color when exposed to light (sunlight) that passes through it, and accordingly, such a pigment cannot function as a blue pigment as intended herein and cannot serve to produce a fluorine resin film according to the present invention. If it is more than 200 nm, the film will suffer from a decrease in light transmittance and an increase in haze and will not serve effectively as transparent film because of poor visibility as described above.

There are no specific limitations on the method to be used for adding fine ITO particles and a blue pigment to fluorine resin film, but the commonly used method is to first disperse ITO and a blue pigment in separate materials such as fluorine resin to provide compositions (hereinafter occasionally referred as ITO master and blue master, respectively) and then add appropriate amounts of the ITO master and the blue master to the fluorine resin that is to be used as base for film production. Alternately, ITO fine particles and a blue pigment may be mixed first, followed by dispersing them in a material such as fluorine resin, but the use of separate masters in which either is dispersed is preferable from the viewpoint of the easiness of optimizing the dispersion conditions and the degree of freedom in the quantities to be added. In regard to their form, pellets are preferable from the viewpoint of the easiness of conveyance to the film production equipment, and their sizes are preferably nearly the same as the pellet size of the base resin used for the fluorine resin film.

The resin in which the ITO fine particles or/and blue pigment are to be dispersed is preferably the same as the base resin for fluorine resin film or the same fluorine based resin as above. A resin that contains no fluorine atoms in its molecular chains may be adopted from the viewpoint of dispersibility of particles, affinity with particles, and economic efficiency, but the use of a resin that is compatible with the base resin is more preferable from the viewpoint of transparency and surface roughness.

There are no specific limitations on the dispersion method to be used, and available ones include a method in which ITO fine particles or/and blue pigment particles and resin are melt-kneaded, a method in which ITO fine particles or/and a blue pigment dispersion liquid and resin are melt-kneaded while removing the dispersion medium simultaneously, and a method in which ITO fine particles or/and a blue pigment is dispersed in a resin solution, followed by removing the solvent. In any method, they are preferably in the form of powder with a large surface area before they are mixed with the resin that works as so-called binder. Known methods for melt-kneading ITO fine particles or/and a blue pigment and resin include, for instance, a method in which powdered resin and the above mentioned powdered particles are mixed together using a tool such as tumbler, ribbon blender, Nauta mixer, Henschel mixer, and planetary mixer and then the mixture is melt-kneaded in a uniaxial or twin screw extruder, which may have a vent, followed by cutting the extruded strands to provide master pellets, and a method in which powdered resin and the above mentioned powdered particles are subjected to primary kneading in a high shear kneading apparatus such as Banbury mixer, kneader, calender roll, and heating kneader to prepare a resin composition, followed by mixing this resin composition with either the same type of resin as above or a resin of a different type to provide similar master pellets. Dispersing agents and various stabilizers may be added as required, but they should be heat resistant and chemical resistant so that they remain undecomposed at the kneading temperature and the film production temperature.

The particle master is preferably in the form of master chips in which the concentration of the dispersed particles is 2 to 100 times that of the particles after their addition in the film. High-concentration master chips are advantageous in terms of the cost for dispersion processing etc., but if the ratio is 100 times or more, the master chips may not be evenly distributed when they are blended with the base resin, possibly leading to a non-uniform film.

The ITO content A (wt%) in the fluorine resin film according to the present invention depends on the film thickness t ($\mu$m) as expressed by formula (1) given below. The heat ray shielding effect depends on the ITO content per unit film area and accordingly, a thicker film can show a required effect at a lower concentration.

$$10/t \leq A \leq 60/t \qquad (1)$$

If the value of A is smaller than 10/t, the heat ray shielding efficiency will deteriorate very sharply. If the value of A is larger than 60/t, the degree of yellowing characteristic of ITO will increase and the haze will also rise, leading to a sharp deterioration in transparency.

The blue pigment content B (wt%) in the fluorine resin film according to the present invention depends on the ITO content A (wt%) as expressed by formula (2) given below. Production of a colorless fluorine resin film is achieved by adjusting the content of the blue pigment in comparison with the content of ITO, and an intended reduction in yellowing can be attained by controlling the YI value at $\pm 0$.

$$0.05A \leq B \leq 0.3A \qquad (2)$$

The ITO content and the blue pigment content in the above fluorine resin film may be examined by the atomic absorption (ICP) analysis or determined by conversion from the ash content by weight.

The diameters of the ITO fine particles and the blue pigment particles in the above fluorine resin film can be determined by slicing the above fluorine resin film with a microtome and observing the cross section by transmission electron microscopy etc.

From the viewpoint of the effect of heat ray shielding , it is desirable for the fluorine resin film according to the present invention to have a light transmittance $T_{IR}$ (%) of zero ($T_{IR} = 0$) in the wavelength range from 1,800 to 2,200 nm even when taking its relation with the near infrared light transmittance into consideration, but in order to simultaneously ensure a high see-through visibility for virtually natural light as intended by the present invention, it is preferably in the range shown by the following formula (A).

$$20 \leq T_{IR} \leq 70 \qquad (A)$$

A $T_{IR}$ of 20% or more is preferable because a visibility of about 30 m through the film can be achieved after adding indium tin oxide in an amount required for this and adding a blue pigment in an amount required for see-through visibility for virtually natural light, whereas a $T_{IR}$ of 70% or less can ensure a practically required degree of heat ray shielding effect.

The fluorine resin film according to the present invention may be used either as a monolayer structure or as a laminated structure containing at least one layer that is equivalent to the fluorine resin film according to the present invention. For instance, a film with a colored pattern may be laminated for a decoration purpose.

Film production may be carried out by a generally known film production method such as melt-extruding film production, calendering film production, and solution-based film production, of which melt-extruding film production is preferable from the viewpoint of film thickness control, productivity, dispersibility of additives, etc. The film may be unstretched, uniaxially stretched, or biaxially stretched, but it is preferably in the form of a virtually non-oriented, unstretched film from the viewpoint of dimensional stability, transparency, and simplicity of film production.

There are no specific limitations on the film thickness, which depends on intended applications, but it is preferably 10 to 500 $\mu$m and more preferably 20 to 300 $\mu$m. A thickness of less than 10 $\mu$m is not preferable because the film will be low in bending strength and accordingly poor in handleability and insufficient in strength. A thickness of more than 500 $\mu$m is not preferable because transparency will decrease, leading to increased weight and inferior handleability.

The fluorine resin film according to the present invention is optically colorless when the yellowness YI is $\pm0$, but the value is preferably in the range expressed by the following formula (3) to ensure that transmitted light beams appears to have natural colors. If the YI value is smaller than the range given by formula (3), tinting with blue will take place, commonly making it difficult for transmitted light beams to have natural colors.

$$-0.01t \leq YI \leq 0.03t \qquad (3)$$

In the above formula, t represents the film thickness ($\mu$m).

For the fluorine resin film according to the present invention, a 100% light transmittance $T_V$(%) in the wavelength range of 380 to 700 nm may be desirable from the viewpoint of see-through visibility, but the film inevitably absorbs light beams and accordingly, it is preferably in the range given by the following formula (4) to ensure see-through visibility for virtually natural light beams.

$$85 \leq T_V \leq 98 \qquad (4)$$

A $T_V$ of 85% or more is preferable because the film will be high in light transmission.

For the fluorine resin film according to the present invention, the light transmittance $T_{IR}$ (%) in the wavelength range of 1,800 to 2,200 nm is more preferably in the range given by the following formula (5) in order to simultaneously ensure a see-through visibility as natural light beams as intended by the present invention.

$$20 \leq T_{IR} \leq 50 \qquad (5)$$

If $T_{IR}$ is controlled at 50% or less, the heat ray shielding property can be enhanced up to a further practical level.

There are no specific limitations on the uses of the fluorine resin film according to the present invention, but major ones include agricultural greenhouse covering material, roofing film material, various window materials, solar battery surface protection material, infrared light shielding film material, other electronic instrument component materials, and vehicle roof material.

Examples

The invention is described concretely below with reference to examples, but it is not limited thereto. The various characteristic values are evaluated based on the measuring methods described below.

(1) Light transmittance $T_V$ (%) in the wavelength range of 380 to 700 nm

A spectrophotometer (U-2001, manufactured by Hitachi High-Technologies Corporation) is used to perform continuous measurement of the transmittance over the wavelength range of 380 to 700 nm by double beam direct ratio photometry to make transmittance measurements ($T_V$i's) at wavelength intervals of 1 nm. The sum of $T_V$i's is divided by the total number of measuring points (n) and converted into percentage to represent the light transmittance $T_V$ (%) in the wavelength range of 380 to 700 nm. The light transmittance $T_V$ (%) is also referred to as visible light transmittance due to its nature, and it is used as common designation in practical cases.

(2) Light transmittance $T_{IR}$ (%) in the wavelength range of 1,800 to 2,200 nm

A spectrophotometer (U-4100, manufactured by Hitachi High-Technologies Corporation) is used to perform continuous measurement of the transmittance over the wavelength range of 1,800 to 2,200 nm by double beam direct ratio photometry to make transmittance measurements ($T_{IR}$i's) at wavelength intervals of 1 nm. The sum of $T_{IR}$i's is divided by the total number of measuring points (n) and converted into percentage to represent the light transmittance $T_{IR}$ (%) in the wavelength range of 1,800 to 2,200 nm. The light transmittance $T_{IR}$ (%) is also referred to as near infrared light transmittance due to its nature, and it is used as common designation in practical cases. As shown in Table 1, furthermore, this is in inverse relation to the heat ray shielding efficiency, which is described later.

(3) YI value (yellowness)

A spectrophotometric colorimeter (CM-5, manufactured by Konica Minolta, Inc.) was used to determine the L* value, a* value, and b* value adopting a D65 light source for a 2° field of view according to JIS-K7105, followed by calculating the YI value according to JIS-K7373.

(4) Light transmittance (%) in the wavelength range of 200 to 380 nm

A spectrophotometer (U-2001, manufactured by Hitachi High-Technologies Corporation) is used to perform continuous measurement of the transmittance over the wavelength range of 200 to 380 nm by double beam direct ratio photometry to make transmittance measurements $T_{UV}i$'s at wavelength intervals of 1 nm. The sum of $T_{UV}i$'s is divided by the total number of measuring points (n) to calculate the light transmittance $T_{UV}$ (%) in the wavelength range of 200 to 380 nm. It is preferably 50% or less from the viewpoint that the 10-year aged deterioration by ultraviolet light should be less than 20%. It is also referred to as ultraviolet light transmittance due to its nature, and it is used as common designation in practical cases. (5) Haze (%)
The haze is measured according to JIS K7105-1981 using a haze meter (HGM-2DP (for C light), manufactured by Suga Test Instruments Co., Ltd.). It is preferably 25% or less from the viewpoint of realizing a visibility of about 30 m when viewed through the film.

(6) Efficiency in heat ray shielding (%)

A cubic black box was constructed using 30 cm × 30 cm black panels, and a 100 W incandescent lamp, temperature measuring sensor (temperature detecting element), and film holder were fixed at the top center, bottom center, and in between, respectively, to build a heat ray shielding evaluation testing apparatus (Fig. 1), which was used to calculate the efficiency in heat ray shielding.
The above test apparatus was installed in a room adjusted to 23°C and a film specimen was set horizontally in the film holder in the black box and exposed to the incandescent lamp for 20 minutes, followed by detecting and recording the bottom temperature Ti (°C) by the temperature detecting element. The incandescent lamp was activated for 20 minutes without setting a film specimen to determine the bottom temperature Tb (°C), and the ratio between the temperature differences from Tb was determined to represent the heat ray shielding efficiency and compared. The heat ray shielding efficiency is preferably 20% or more on the basis of the threshold which is assumed to be about the point at which a temperature difference is immediately detected on the human skin through the film.

$$\text{Heat ray shielding efficiency (\%)} = 100 \times (Tb - Ti)/(Tb - 23)$$

(7) Particle diameter

To determine the diameters of ITO and blue pigment particles, an ultrathin section with a thickness of 0.1 $\mu$m or less was prepared by slicing a fluorine resin film containing these particles perpendicularly to the film surface, and observed by a transmission electron microscope (such as JEM-1200EX manufactured by JEOL Ltd.) at an observing magnification of 200,000 times. In the observation field of view, 50 particles were selected randomly and the diameter of each particle was measured at such a point where the diameter, i.e. the size across the particle, reaches its maximum, followed by calculating the average over the particles to represent their average diameter.

(8) Weather resistance test

Accelerated exposure test was carried out according to JIS K7363 using Sunshine Weather Meter manufactured by Suga Test Instruments Co., Ltd., and evaluations in the various transmittances, haze, and heat ray shielding were made for film specimens after 500 hours of exposure.

(A) Preparation of ITO dispersed fluorine resin (ITO master)

A mixture of indium tin oxide (ITO) powder with an average particle diameter of 30 nm and an ethylene - tetrafluoroethylene copolymer (Neofron (registered trademark) ETFE EP-526, manufactured by Daikin Industries, Ltd.), which had been also powdered in advance, was melt-kneaded by a Banbury mixer to prepare a composition containing 20 wt% of ITO. Then, this composition was mixed with pellets of an ethylene - tetrafluoroethylene copolymer (Neofron (registered trademark) ETFE EP-546, manufactured by Daikin Industries, Ltd.) (ETFE pellets) so that indium tin oxide would account for 5 wt%, supplied to a vented twin screw extruder, extruded into strands, and cut to prepare pellets of ITO-containing ETFE resin (ITO master A1).

(B) Preparation of blue pigment dispersed fluorine resin (blue master)

A mixture of cobalt blue (FCM H1104, manufactured by Dainichiseika Color & Chemicals Mfg. Co., Ltd.) with an average particle diameter of 50 nm and an ethylene - tetrafluoroethylene copolymer (Neofron (registered trademark) ETFE EP-526, manufactured by Daikin Industries, Ltd.), which had been also powdered in advance, was melt-kneaded by a Banbury mixer to prepare a composition containing 20 wt% of cobalt blue. Then, this composition was mixed with ETFE pellets so that cobalt blue would account for 2 wt%, supplied to a vented twin screw extruder, extruded into strands, and cut to prepare pellets of cobalt blue-containing ETFE resin (blue master B1).

[Example 1]

A 462.5 kg amount of the ETFE pellets, 25 kg of the ITO master A1, and 12.5 kg of the blue master B1 were mixed uniformly, supplied to a single screw extruder with a screw diameter of 65 mm, filtrated through a filter, and then extruded through a T-die at 330°C to produce a film, which was brought into contact with cooling rolls set at 175°C for cooling and solidification and wound up to provide an unstretched film with a thickness of 100 $\mu$m, an ITO content of 0.25 wt%, and a cobalt blue content of 0.050 wt%.

The resulting film was free of yellowing, colorless, and transparent and had high see-through visibility to allow the outdoor landscape to appear in natural colors when viewed through the film. The near infrared light transmittance of this film was a low 38.7% and its heat ray shielding efficiency was 34.5% as determined by a heat ray shielding evaluation testing apparatus. Its ultraviolet light transmittance was also a low 26.5%, suggesting that film also had an ultraviolet light shielding effect. Their film characteristics are summarized in Table 1.

[Example 2]

Using the same materials as in Example 1, 485 kg of the ETFE pellets, 10 kg of the ITO master A1, and 5 kg of the blue master B1 were mixed uniformly, supplied to a film production apparatus equipped with a single screw extruder with a screw diameter of 65 mm, filter, T-die, and cooling drums, and melt-extruded to produce an unstretched film with a thickness of 250 $\mu$m, an ITO content of 0.10 wt%, and a cobalt blue content of 0.020 wt%.

The resulting film was free of yellowing, colorless, and transparent and had high see-through visibility to allow the outdoor landscape to appear in nearly natural colors when viewed through the film. The near infrared light transmittance of this film was a low 42.3% and its heat ray shielding efficiency was 36.1% as determined by a heat ray shielding evaluation testing apparatus. Its ultraviolet light transmittance was a very low 6.1%, suggesting that film also had an ultraviolet light shielding effect. Their film characteristics are summarized in Table 1. After the weather resistance test, furthermore, the film had a visible light transmittance of 90.2%, near infrared light transmittance of 43.0%, ultraviolet light transmittance of 6.3%, and YI of 4.3, which were near the initial values, showing that the film had high weather resistance. The film characteristics after the weather resistance test are summarized in Table 2.

[Examples 3 and 4 and Comparative examples 1 and 2]

Except for varying the blending quantity of the ITO master, the same procedure as in Example 2 was carried out to provide an unstretched film with a thickness of 250 $\mu$m.

As seen from Table 1, which summarizes observed film characteristics, the average light transmittance over the range of 1,800 to 2,200 nm decreases and the heat ray shielding efficiency improves inversely as the ITO content in the film increases. When the ITO content was 0.003 wt% (Comparative example 1), the near infrared light transmittance was a high 92.4% and furthermore, the heat ray shielding efficiency was an insufficiently low 7.2%. When the ITO content was 0.30 wt% (Comparative example 2), it can be said that a sufficient heat ray shielding effect was achieved, but the haze was a high 27.0% and the see-through visibility was insufficiently low.

[Examples 5 and 6 and Comparative examples 3 and 4]

Except for varying the blending quantity of the ITO master, the same procedure as in Example 2 was carried out to provide an unstretched film with a thickness of 50 μm. Their film characteristics are summarized in Table 1. As the ITO content in the film increases, the near infrared light transmittance decreases and the heat ray shielding efficiency improves. When the ITO content was 0.10 wt% (Comparative example 3), the near infrared light transmittance was a high 68.6% and furthermore, the heat ray shielding efficiency was an insufficiently low 12.9%. When the ITO content was 2.00 wt% (Comparative example 4), the heat ray shielding efficiency was 45.3%, which indicates an effective heat ray shielding efficiency, but the haze was a high 71.2% and the transparency was insufficiently low.

[Examples 7 and 8 and Comparative examples 5 and 6]

Except for varying the blending quantity of the blue master, the same procedure as in Example 2 was carried out to provide an unstretched film with a thickness of 250 μm. Their film characteristics are summarized in Table 1. The YI value (yellowness) decreases and the film becomes nearly colorless as the blue content in the film increases, but the film becomes significantly blue as the content increases excessively, suggesting that there must be an optimum blue content that depends on the ITO content (Comparative example 6).

[Example 9 and Comparative examples 7 and 8]

Except for varying the particle diameter in ITO masters to prepare ITO masters A2 (average particle diameter 150 nm), A3 (5 nm), and A4 (300 nm) as in Example 1(1), the same procedure as in Example 2 was carried out to provide unstretched films with a thickness of 250 μm. Their film characteristics are summarized in Table 1. When the average particle diameter of ITO was 5 nm, the near infrared light transmittance was a high 81.6% and the heat ray shielding efficiency was an insufficiently low 12.7%. When the average particle diameter was 300 nm, the near infrared light transmittance was 57.4% and the heat ray shielding efficiency was sufficiently high 26.5%, but the haze was a high 33.5%, indicating that the transparency was insufficiently low.

[Example 10 and Comparative examples 9 and 10]

Except for varying the particle diameter of the blue pigment to prepare blue masters B2 (average particle diameter 100 nm), B3 (5 nm), and B4 (250 nm) as in Example 1(2), the same procedure as in Example 2 was carried out to provide unstretched films with a thickness of 250 μm. Their film characteristics are summarized in Table 1. When the average particle diameter of the blue pigment was 5 nm, the near infrared light transmittance was a high 69.8% and the heat ray shielding efficiency was an insufficiently low 16.4%. When the average particle diameter was 250 nm, the near infrared light transmittance was 41.9% and the heat ray shielding efficiency was 37.2%, but the haze was a high 28.2%, indicating that the transparency was insufficiently low.

[Example 11]

A mixture of copper phthalocyanine (manufactured by Dainichiseika Color & Chemicals Mfg. Co., Ltd.) with an average particle diameter of 50 nm and an ethylene - tetrafluoroethylene copolymer (Neofron (registered trademark) ETFE EP-526, manufactured by Daikin Industries, Ltd.), which is also powdered in advance, is melt-kneaded by a Banbury mixer to prepare a composition containing 20 wt% of copper phthalocyanine. Subsequently, this composition was mixed with ETFE pellets in such a manner that the copper phthalocyanine would account for 2 wt%, supplied to a vented twin screw extruder, extruded into strands, and cut to provide pellets of copper phthalocyanine-containing ETFE resin (blue master B5), and except for this, the same procedure as in Example 2 was carried out to provide an unstretched film with a thickness of 250 μm. The resulting film was slightly yellowish, colorless, and transparent and had high see-through visibility to allow the outdoor landscape to appear in nearly natural colors when viewed through the film. The near infrared light transmittance of this film was a low 44.6% and its heat ray shielding efficiency was 35.7% as determined by a heat ray shielding evaluation testing apparatus. Its ultraviolet light transmittance was a very low 6.7%, suggesting that film also had an ultraviolet light shielding effect. Their film characteristics are summarized in Table 1. After a 500-hour weather resistance test, the visible light transmittance slightly decreased to 85.5%, but the film maintained a near infrared light transmittance of 45.0%, heat ray shielding efficiency of 35.8%, ultraviolet light transmittance of 8.3%, and YI value (yellowness) of 7.3, which were near the initial values, indicating that the film had weather resistance in the weather resistance test. The film characteristics before and after the weather resistance test are summarized in Table 2.

[Examples 12-14]

Except for varying the weight ratio between indium oxide and tin oxide (In/Sn) contained in ITO in preparing ITO masters as in Example 1(1), the same procedure as in Example 2 was carried out to provide unstretched films with a thickness of 250 $\mu$m. Their film characteristics are summarized in Table 1. Some heat ray shielding effect is shown when the tin oxide content in ITO is in the range of 3 to 20 wt%. In this range, the near infrared light transmittance increases, hence the heat ray shielding efficiency improves, as the tin oxide content in ITO decreases, which represents a feature of this film.

[Comparative example 11]

ETFE pellets free of ITO and blue pigments were extruded by the same film production procedure as in Example 1(3) to produce an unstretched film with a thickness of 250 $\mu$m. Their film characteristics are summarized in Table 1. Being free of additional particles that shield transmitted light, the film showed the highest visible light transmittance and near infrared light transmittance in the tables. Accordingly, it had the lowest heat ray shielding efficiency.

[Comparative example 12]

A master containing fine particles of an antimony tin compound (ATO) as shown in Table 1 but free of ITO and blue pigments was prepared as in Example 1(1) and used. It was extruded by the same film production procedure as in Example 1(3) to provide an unstretched film with a thickness of 250 $\mu$m. Some heat ray shielding effect was shown as compared with Comparative example 11, but as compared with Example 4, for instance, the heat ray shielding efficiency is about 1/4 although the ATO content is four times the ITO content. Thus, ATO is significantly less effective than ITO when compared at the same particle content in the film.

[Table 1-1]

| | indium tin oxide | | | | | blue pigments | | | | | film thickness t ($\mu$m) |
|---|---|---|---|---|---|---|---|---|---|---|---|
| | content A (wt%) | 10/t | 60/t | average particle diameter (nm) | composition ratio In/Sn | content B (wt%) | 0.05A | 0.3A | average particle diameter (nm) | pigment | |
| Example 1 | 0.25 | 0.10 | 0.60 | 30 | 95/5 | 0.050 | 0.013 | 0.075 | 50 | cobalt blue | 100 |
| Example 2 | 0.10 | 0.04 | 0.24 | 30 | 95/5 | 0.020 | 0.005 | 0.030 | 50 | cobalt blue | 250 |
| Example 3 | 0.05 | 0.04 | 0.24 | 30 | 95/5 | 0.015 | 0.003 | 0.015 | 50 | cobalt blue | 250 |
| Example 4 | 0.20 | 0.04 | 0.24 | 30 | 95/5 | 0.020 | 0.010 | 0.060 | 50 | cobalt blue | 250 |
| Example 5 | 0.30 | 0.20 | 1.20 | 30 | 95/5 | 0.020 | 0.015 | 0.090 | 50 | cobalt blue | 50 |
| Example 6 | 1.00 | 0.20 | 1.20 | 30 | 95/5 | 0.050 | 0.050 | 0.300 | 50 | cobalt blue | 50 |
| Example 7 | 0.10 | 0.04 | 0.24 | 30 | 95/5 | 0.010 | 0.005 | 0.030 | 50 | cobalt blue | 250 |
| Example 8 | 0.10 | 0.04 | 0.24 | 30 | 95/5 | 0.030 | 0.005 | 0.030 | 50 | cobalt blue | 250 |
| Example 9 | 0.10 | 0.04 | 0.24 | 150 | 95/5 | 0.020 | 0.005 | 0.030 | 50 | cobalt blue | 250 |
| Example 10 | 0.10 | 0.04 | 0.24 | 50 | 95/5 | 0.020 | 0.005 | 0.030 | 100 | cobalt blue | 250 |
| Example 11 | 0.10 | 0.04 | 0.24 | 30 | 95/5 | 0.020 | 0.005 | 0.030 | 50 | copper phthalocyanine | 250 |
| Example 12 | 0.10 | 0.04 | 0.24 | 30 | 97/3 | 0.020 | 0.005 | 0.030 | 50 | cobalt blue | 250 |
| Example 13 | 0.10 | 0.04 | 0.24 | 30 | 90/10 | 0.020 | 0.005 | 0.030 | 50 | cobalt blue | 250 |
| Example 14 | 0.10 | 0.04 | 0.24 | 30 | 80/20 | 0.020 | 0.005 | 0.030 | 50 | cobalt blue | 250 |
| Comparative example 1 | 0.003 | 0.04 | 0.24 | 30 | 95/5 | 0.020 | 0.00,015 | 0.0,009 | 50 | cobalt blue | 250 |
| Comparative example 2 | 0.30 | 0.04 | 0.24 | 30 | 95/5 | 0.020 | 0.015 | 0.090 | 50 | cobalt blue | 250 |
| Comparative example 3 | 0.10 | 0.20 | 1.20 | 30 | 95/5 | 0.020 | 0.005 | 0.030 | 50 | cobalt blue | 50 |
| Comparative example 4 | 2.00 | 0.20 | 1.20 | 30 | 95/5 | 0.020 | 0.100 | 0.600 | 50 | cobalt blue | 50 |
| Comparative example 5 | 0.10 | 0.04 | 0.24 | 30 | 95/5 | 0.003 | 0.005 | 0.030 | 50 | cobalt blue | 250 |

(continued)

| | indium tin oxide | | | | | blue pigments | | | | | film thickness t (μm) |
|---|---|---|---|---|---|---|---|---|---|---|---|
| | content A (wt%) | 10/t | 60/t | average particle diameter (nm) | composition ratio In/Sn | content B (wt%) | 0.05A | 0.3A | average particle diameter (nm) | pigment | |
| Comparative example 6 | 0.10 | 0.04 | 0.24 | 30 | 95/5 | 0.050 | 0.005 | 0.030 | 50 | cobalt blue | 250 |
| Comparative example 7 | 0.10 | 0.04 | 0.24 | 5 | 95/5 | 0.020 | 0.005 | 0.030 | 50 | cobalt blue | 250 |
| Comparative example 8 | 0.10 | 0.04 | 0.24 | 300 | 95/5 | 0.020 | 0.005 | 0.030 | 50 | cobalt blue | 250 |
| Comparative example 9 | 0.10 | 0.04 | 0.24 | 30 | 95/5 | 0.020 | 0.005 | 0.030 | 5 | cobalt blue | 250 |
| Comparative example 10 | 0.10 | 0.04 | 0.24 | 30 | 95/5 | 0.020 | 0.005 | 0.030 | 250 | cobalt blue | 250 |
| Comparative example 11 | 0.00 | 0.04 | 0.24 | - | - | 0.000 | 0.000 | 0.000 | - | - | 250 |
| Comparative example 12 | 0.80 | 0.04 | 0.24 | 30 | (antimony tin oxide 95/5) | 0.000 | 0.040 | 0.240 | - | - | 250 |

[Table 1-2]

| | film thickness t (μm) | film characteristics | | | | | | | |
|---|---|---|---|---|---|---|---|---|---|
| | | yellowness YI | -0.01t | 0.03t | light transmittance Tv(%) | light transmittance $T_{IR}$ (%) | haze (%) | ultraviolet light transmittance (%) | heat ray shielding efficiency (%) |
| Example 1 | 100 | 2.7 | -1.0 | 3.0 | 91.6 | 38.7 | 8.9 | 26.5 | 34.5 |
| Example 2 | 250 | 4.1 | -2.5 | 7.5 | 90.7 | 42.3 | 9.5 | 6.1 | 36.1 |
| Example 3 | 250 | 2.9 | -2.5 | 7.5 | 91.0 | 64.7 | 9.0 | 11.2 | 22.0 |
| Example 4 | 250 | 7.3 | -2.5 | 7.5 | 86.2 | 23.6 | 16.1 | 4.8 | 45.3 |
| Example 5 | 50 | 1.4 | -0.5 | 1.5 | 86.9 | 48.7 | 17.6 | 32.7 | 21.7 |
| Example 6 | 50 | 7.1 | -0.5 | 1.5 | 83.8 | 24.5 | 23.2 | 26.2 | 48.9 |
| Example 7 | 250 | 6.3 | -2.5 | 7.5 | 89.7 | 42.9 | 13.0 | 6.2 | 36.5 |
| Example 8 | 250 | 2.1 | -2.5 | 7.5 | 89.2 | 42.3 | 18.3 | 5.8 | 36.8 |
| Example 9 | 250 | 4.3 | -2.5 | 7.5 | 86.9 | 48.3 | 18.6 | 5.8 | 38.1 |
| Example 10 | 250 | 3.8 | -2.5 | 7.5 | 83.5 | 39.5 | 19.6 | 6.3 | 35.7 |
| Example 11 | 250 | 5.1 | -2.5 | 7.5 | 90.9 | 44.6 | 11.6 | 6.7 | 35.7 |
| Example 12 | 250 | 4.1 | -2.5 | 7.5 | 90.7 | 37.3 | 9.0 | 5.4 | 41.7 |
| Example 13 | 250 | 4.3 | -2.5 | 7.5 | 91.0 | 47.6 | 20.4 | 6.6 | 32.1 |
| Example 14 | 250 | 4.5 | -2.5 | 7.5 | 88.2 | 48.8 | 23.2 | 7.1 | 30.8 |
| Comparative example 1 | 250 | 2.1 | -2.5 | 7.5 | 91.1 | 92.4 | 8.5 | 21.9 | 7.2 |
| Comparative example 2 | 250 | 8.9 | -2.5 | 7.5 | 79.6 | 16.3 | 27.0 | 2.6 | 54.2 |
| Comparative example 3 | 50 | 0.2 | -0.5 | 1.5 | 89.2 | 68.6 | 12.6 | 39.6 | 12.9 |
| Comparative example 4 | 50 | 11.7 | -0.5 | 1.5 | 52.6 | 18.1 | 71.2 | 10.7 | 61.3 |
| Comparative example 5 | 250 | 8.8 | -2.5 | 7.5 | 89.8 | 43.1 | 10.5 | 6.6 | 36.1 |

(continued)

| | film thickness t (μm) | yellowness YI | -0.01t | 0.03t | light transmittance Tv(%) | light transmittance $T_{IR}$ (%) | haze (%) | ultraviolet light transmittance (%) | heat ray shielding efficiency (%) |
|---|---|---|---|---|---|---|---|---|---|
| | | | | | | film characteristics | | | |
| Comparative example 6 | 250 | -2.8 | -2.5 | 7.5 | 88.6 | 42.1 | 23.0 | 5.4 | 36.8 |
| Comparative example 7 | 250 | 3.8 | -2.5 | 7.5 | 89.7 | 81.6 | 8.9 | 11.0 | 12.7 |
| Comparative example 8 | 250 | 4.4 | -2.5 | 7.5 | 79.3 | 57.4 | 33.5 | 4.8 | 26.5 |
| Comparative example 9 | 250 | 7.6 | -2.5 | 7.5 | 89.9 | 69.8 | 10.7 | 6.0 | 16.4 |
| Comparative example 10 | 250 | 1.3 | -2.5 | 7.5 | 69.1 | 41.9 | 28.2 | 6.4 | 37.2 |
| Comparative example 11 | 250 | 4.5 | -2.5 | 7.5 | 91.1 | 92.5 | 8.3 | 22.6 | 6.9 |
| Comparative example 12 | 250 | 12.3 | -2.5 | 7.5 | 82.3 | 84.2 | 24.6 | 6.2 | 11.4 |

[Table 2]

| | indium tin oxide | | blue pigments | | | film thick-ness t ($\mu$m) | | film characteristics | | | | | | |
|---|---|---|---|---|---|---|---|---|---|---|---|---|---|---|
| | content A (wt%) | average particle diameter (nm) | pigment | content B (wt%) | average particle di-ameter (nm) | | | yellowness YI | light transmit-tance Tv (%) | light transmit-tance $T_{IR}$ (%) | haze (%) | ultraviolet light transmittance (%) | heat ray shielding efficiency (%) |
| Example 2 | 0.10 | 30 | cobalt blue | 0.020 | 50 | 250 | before weather resistance test | 4.1 | 90.7 | 42.3 | 9.5 | 6.1 | 36.1 |
| | | | | | | | after weath-er resist-ance test | 4.3 | 90.2 | 43.0 | 9.7 | 6.3 | 36.0 |
| Example 11 | 0.10 | 30 | copper phthalocyanine | 0.020 | 50 | 250 | before weather resistance test | 5.1 | 90.9 | 44.6 | 11.6 | 6.7 | 35.7 |
| | | | | | | | after weath-er resist-ance test | 7.3 | 85.5 | 45.0 | 12.0 | 8.3 | 35.8 |

Industrial Applicability

The fluorine resin film according to the present invention is high in transparency, heat ray shielding property, and weather resistance, and serves to produce fluorine resin moldings that can be widely used as materials for building roofs, walls, windows, arcades, dome ceilings, and carports, and in particular, its value can be further enhanced as it is high in transmittance for visible light beams and also high in heat ray shielding effect with a heat ray shielding efficiency of more than 20%.

Explanation of numerals

1.    black box

2.    infrared light lamp

3.    temperature detecting element

4.    film holder

5.    film under measurement

6.    temperature recorder

**Claims**

1.  Fluorine resin film comprising indium tin oxide with an average particle diameter of 10 to 200 nm and a blue pigment with an average particle diameter of 10 to 200 nm and satisfying the following formulae (1) and (2) simultaneously:

$$10/t \leq A \leq 60/t \quad (1)$$

$$0.05A \leq B \leq 0.3A \quad (2)$$

wherein A, B, and t represent the content (wt%) of the indium tin oxide, the content (wt%) of the blue pigment, and the thickness ($\mu$m) of the film, respectively, and
wherein the average particle diameter of indium tin oxide and blue pigment particles is determined by preparing an ultrathin section with a thickness of 0.1 $\mu$m or less by slicing a fluorine resin film containing these particles perpendicularly to the film surface, and observing by a transmission electron microscope at an observing magnification of 200,000 times, whereby in the observation field of view, 50 particles are selected randomly and the diameter of each particle is measured at such a point where the diameter, i.e. the size across the particle, reaches its maximum, followed by calculating the average over the particles.

2.  Fluorine resin film as described in claim 1 further satisfying the following formula (A):

$$20 \leq T_{IR} \leq 70 \quad (A)$$

wherein $T_{IR}$ represents the light transmittance (%) in the wavelength range of 1,800 to 2,200 nm, determined by continuous measurement of the transmittance over the wavelength range of 1,800 to 2,200 nm by double beam direct ratio photometry using a spectrophotometer to make transmittance measurements ($T_{IR}$i's) at wavelength intervals of 1 nm, whereby the sum of $T_{IR}$i's is divided by the total number of measuring points (n) and converted into percentage.

3.  Fluorine resin film as described in either claim 1 or 2 having a thickness t of 10 to 500 $\mu$m and satisfying the following formulae (3), (4), and (5) simultaneously:

$$-0.01t \leq YI \leq 0.03t \qquad (3)$$

$$85 \leq T_V \leq 98 \qquad (4)$$

$$20 \leq T_{IR} \leq 50 \qquad (5)$$

wherein YI, $T_V$, and $T_{IR}$ represent the yellowness of the fluorine resin film, the light transmittance (%) in the wavelength range of 380 to 700 nm, and the light transmittance (%) in the wavelength range of 1,800 to 2,200 nm, respectively,

wherein YI is determined according to JIS-K7373, and Tv is determined by continuous measurement of the transmittance over the wavelength range of 380 to 700 nm by double beam direct ratio photometry using a spectrophotometer to make transmittance measurements ($T_V$i's) at wavelength intervals of 1 nm, whereby the sum of $T_V$i's is divided by the total number of measuring points (n) and converted into percentage.

4. Fluorine resin film as described in any one of claims 1 to 3, wherein the blue pigment is cobalt blue.

**Patentansprüche**

1. Fluorharzfolie, die Indiumzinnoxid mit einem durchschnittlichen Partikeldurchmesser von 10 bis 200 nm und ein blaues Pigment mit einem durchschnittlichen Partikeldurchmesser von 10 bis 200 nm umfasst, und die gleichzeitig die folgenden Formeln (1) und (2) erfüllt:

$$10/t \leq A \leq 60/t \qquad (1)$$

$$0{,}05A \leq B \leq 0{,}3\,A \qquad (2)$$

wobei A, B und t den Gehalt (Gew.-%) des Indiumzinnoxids, den Gehalt (Gew.-%) des blauen Pigments bzw. die Dicke ($\mu$m) der Folie repräsentieren, und

wobei der durchschnittliche Partikeldurchmesser des Indiumzinnoxids und der blauen Pigmentpartikel bestimmt wird, indem ein Ultradünnschnitt mit einer Dicke von 0,1 $\mu$m oder weniger hergestellt wird, indem eine Fluorharzfolie, die diese Partikel enthält, senkrecht zur Folienoberfläche geschnitten wird und mittels eines Transmissionselektronenmikroskops bei einer 200.000-fachen Betrachtungsvergrößerung betrachtet wird, wobei in dem inspizierten Betrachtungsfeld 50 Partikel zufällig ausgewählt werden und der Durchmesser jedes Partikels an einer solchen Stelle gemessen wird, an der der Durchmesser, d.h. die Größe quer über den Partikel, sein Maximum erreicht, gefolgt vom Berechnen des Durchschnitts aus den Partikeln.

2. Fluorharzfolie nach Anspruch 1, die ferner die folgende Formel (A) erfüllt:

$$20 \leq T_{IR} \leq 70 \qquad (A)$$

wobei $T_{IR}$ die Lichtdurchlässigkeit (%) in dem Wellenlängenbereich von 1800 bis 2200 nm repräsentiert, bestimmt mittels kontinuierlicher Messung der Durchlässigkeit über den Wellenlängenbereich von 1800 bis 2200 nm mittels vergleichender, verhältnisbildender Doppelstrahl-Photometrie [Engl.: double beam ratio photometry] unter Verwendung eines Spektrophotometers, um Durchlässigkeits-messungen ($T_{IR}$i's) in Wellenlängenintervallen von 1 nm durchzuführen, wobei die Summe der $T_{IR}$i's durch die Gesamtzahl der Messpunkte (n) dividiert und in Prozent umgewandelt wird.

3. Fluorharzfolie nach einem der Ansprüche 1 oder 2, die eine Dicke t von 10 bis 500 $\mu$m aufweist, und die gleichzeitig die folgenden Formeln (3), (4) und (5) erfüllt:

$$-0{,}01t \leq YI \leq 0{,}03t \qquad (3)$$

$$85 \leq T_v \leq 98 \qquad (4)$$

$$20 \leq T_{IR} \leq 50 \qquad (5)$$

wobei YI, $T_V$ und $T_{IR}$ den Gelbstich der Fluorharzfolie, die Lichtdurchlässigkeit (%) in dem Wellenlängenbereich von 380 bis 700 nm bzw. die Lichtdurchlässigkeit (%) in dem Wellenlängenbereich von 1800 bis 2200 nm repräsentieren,
wobei Yi gemäß JIS-K7373 bestimmt wird und $T_V$ mittels kontinuierlicher Messung der Durchlässigkeit über den Wellenlängenbereich von 380 bis 700 nm durch vergleichende, verhältnisbildende Doppelstrahl-Photometrie unter Verwendung eines Spektrophotometers bestimmt wird, um Durchlässigkeitsmessungen ($T_V$i's) in Wellenlängenintervallen von 1 nm durchzuführen, wobei die Summe der $T_V$i's durch die Gesamtzahl der Messpunkte (n) dividiert und in Prozent umgewandelt wird.

4. Fluorharzfolie nach einem der Ansprüche 1 bis 3, wobei das blaue Pigment Kobaltblau ist.


**Revendications**

1. Film de résine fluorée comprenant de l'oxyde d'indium et d'étain ayant une granulométrie moyenne de 10 à 200 nm et un pigment bleu ayant une granulométrie moyenne de 10 à 200 $\mu$m et satisfaisant simultanément aux formules (1) et (2) suivantes :

$$10/t \leq A \leq 60/t \qquad (1)$$

$$0{,}05A \leq B \leq 0{,}3A \qquad (2)$$

dans lesquelles A, B et t représentent respectivement la teneur (en % en poids) en l'oxyde d'indium et d'étain, la teneur (en % en poids) en le pigment bleu, et l'épaisseur ($\mu$m) du film, et dans lequel la granulométrie moyenne des particules de l'oxyde d'indium et d'étain et du pigment bleu est déterminée par préparation d'une section ultrafine ayant une épaisseur de 0,1 $\mu$m ou moins par tranchage d'un film de résine fluorée contenant ces particules perpendiculairement à la surface du film, et observation sous un microscope électronique à transmission avec un grossissement d'observation de 200 000 fois où, dans le champ de vue d'observation, 50 particules sont sélectionnées au hasard et le diamètre de chaque particule est mesuré en un point où le diamètre, selon la dimension longitudinale de la particule, atteint son maximum, opération suivie du calcul de la moyenne sur les particules.

2. Film de résine fluoré selon la revendication 1, satisfaisant en outre à la formule (A) suivante :

$$20 \leq T_{IR} \leq 70 \qquad (A)$$

dans laquelle $T_{IR}$ représente le coefficient de transmission de la lumière (%) dans la gamme de longueurs d'onde allant de 1800 à 2200 nm, déterminé par mesure continue du coefficient de transmission sur la gamme de longueurs d'onde allant de 1800 à 2200 nm par photométrie en rapport direct à double faisceau utilisant un spectrophotomètre pour effectuer des mesures de coefficient de transmission (i $T_{IR}$) à des intervalles de longueurs d'onde de 1 nm, la somme des i $T_{IR}$ étant divisée par le nombre total de points de mesure (n) et convertie en pourcentage.

3. Film de résine fluorée selon l'une ou l'autre des revendications 1 et 2, ayant une épaisseur t de 10 à 500 $\mu$m et satisfaisant simultanément aux formules (3), (4) et (5) suivantes :

$$-0,01t \leq YI \leq 0,03\ t \qquad\qquad (3)$$

$$85 \leq T_V \leq 98 \qquad\qquad (4)$$

$$20 \leq T_{IR} \leq 50 \qquad\qquad (5)$$

dans lesquelles YI, $T_V$ et $T_{IR}$ représentent respectivement le jaunissement du film de résine fluorée, le coefficient de transmission de la lumière (%) dans la gamme de longueurs d'onde allant de 380 à 700 nm, et le coefficient de transmission de la lumière (%) dans la gamme de longueurs d'onde allant de 1800 nm à 2200 nm, où YI est déterminé conformément à la norme JIS-K7373, et Tv est déterminé par mesure continue du coefficient de transmission sur la gamme de longueurs d'onde allant de 380 à 700 nm par photométrie en rapport direct à double faisceau utilisant un spectrophotomètre pour effectuer des mesures de coefficient de transmission (i $T_V$) à des intervalles de longueurs d'onde de 1 nm, la somme des i $T_V$ étant divisée par le nombre total de points de mesure (n) et convertie en pourcentage.

4. Film de résine fluorée selon l'une quelconque des revendications 1 à 3, dans lequel le pigment bleu est le bleu de cobalt.

[Figure 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI9205898 A
- JP 2002069258 A
- JP 2004025586 A
- JP 2001171060 A
- JP 2008181838 A
- JP 2004025586 B